(19) Europäisches Patentamt
European Patent Office
Office européen des brevets

(11) EP 1 849 363 A1

(12) EUROPEAN PATENT APPLICATION

(43) Date of publication:
**31.10.2007 Bulletin 2007/44**

(21) Application number: **06388016.5**

(22) Date of filing: **09.03.2006**

(51) Int Cl.:
***A01N 43/90*** *(2006.01)* ***A01N 43/22*** *(2006.01)*
***A01P 7/00*** *(2006.01)*

(84) Designated Contracting States:
**AT BE BG CH CY CZ DE DK EE ES FI FR GB GR HU IE IS IT LI LT LU LV MC NL PL PT RO SE SI SK TR**
Designated Extension States:
**AL BA HR MK YU**

(71) Applicant: **Cheminova A/S**
**7620 Lemvig (DK)**

(72) Inventors:
- **Pedersen, Morten**
  **7620 Lemvig (DK)**
- **Woldum, Henriette Sie**
  **7620 Lemvig (DK)**

(74) Representative: **Rasmussen, Preben et al**
**Internationalt Patent-Bureau A/S**
**Rigensgade 11**
**1316 Copenhagen K (DK)**

(54) **Synergistic combination of glutamate- and GABA-gated chloride agonist pesticide and at least one of Vitamin E or Niacin**

(57) Presented are pesticidal compositions comprising at least one compound A selected among Glutamate- or GABA-gated chloride channel agonist pesticides and at least one compound B which is selected among Vitamin E and Niacin. The combinations of these compounds show a synergistic effect in the control of harmful pests.

EP 1 849 363 A1

## Description

The present invention relates to pesticidal compositions comprising as active ingredients at least one compound A selected among Glutamate- or GABA-gated chloride channel agonist pesticides and at least one compound B which is selected among Vitamin E and Niacin. The combinations of these compounds show a synergistic effect in the control of harmful pests, that is, the compound(s) B enhances the pesticidal effect of the compound(s) A.

## Background

Pesticidal active compounds whose targets are insects, arthropods and nematodes usually have a neurological effect on such pests. Their pesticidal target sites are defined as the specific biochemical or physiological sites within an organism that pesticide compounds interact with to create a toxic effect. Among neurological target sites are acetylcholinesterase enzyme, voltage-gated sodium channels, Glutamate- and GABA-gated chloride channels and nicotinic acetylcholine receptors. The actions of pesticides at these sites are diverse and range from enzyme inhibition, to receptor agonism (stimulation), receptor antagonism (blockage), and ion channel modulation. Glutamate and gamma-aminobutyric acid (GABA) are inhibitory neurotransmitters that elicit the influx of chloride ions into central neurons through chloride channels.

Glutamate- or GABA-gated chloride channel agonist pesticide compounds are a well known and versatile group of compounds that are used as agrochemicals and as drugs within both human and veterinary medicine. The compounds are known to have both insecticidal, acaricidal and anthelminthic effect even when applied at very low rates compared to other agrochemicals and drugs. They are equally suitable for controlling both plant pests and ecto- and endo-parasites in animals and humans. Their mode of action is based on the interference with the passage of chloride ions through the Glutamate or GABA regulated chloride ion channels, which results in uncontrolled physiological activity and subsequent death of the pest. The effect is inhibitory, i.e., the compound interferes agonistically with the function of the Glutamate- or GABA-gated chloride channels and elicit increased chloride current into cells. The increased chloride current results in intracellular hyperpolarization and (neuro)inhibition via the cancellation of positively charged excitatory impulses carried by sodium currents, and eventually leads to the death of the pest. By the term "agonist" is meant a chemical that produces a response, such as excitation or inhibition of action potentials when it binds to a specific receptor, opposed to an "antagonist" which is a chemical that, when it binds to a receptor, blocks the receptor and prevents it from responding.

Among the Glutamate and GABA-gated chloride channel agonist pesticides are macrocyclic lactone compounds, which have a complex ring structure, and include the well known groups of avermectins, milbemycines and the spinosyns. These pesticides are known not to possess a rapid knock-down-effect, e.g. significantly lower than that observed with insecticidal compounds from the group of pyrethroids.

The avermectins are a group of macrocyclic lactone compounds produced by fermentation of *Streptomyces avermitilis* and mutations thereof. The individual avermectins, either naturally derived or prepared by synthetic means (e.g. Ivermectin), are usually mixtures of up to 8 major components designated as $A_{1a}$, $A_{1b}$ $A_{2a}$, $A_{2b}$, $B_{1a}$, $B_{1b}$ $B_{2a}$, $B_{2b}$ in various ratios. For instance Abamectin is a mixture of the two closely structurally related components designated $B_{1a}$ and $B_{1b}$ usually in a 80:20 ratio, whereas the active compound known as Aversectin C further comprises additional components in addition to those in Abamectin. Avermectin compounds are, for example, known from United States patents nos. 3,950,360; US 4,310,519; US 4,378,353; US 5,288,710; US 4,427,663; US 4,199,569; US 5,089,480 and US 5,981,500.

The structure of the avermectins can be illustrated by the general formula (1), which only serves an illustrative purpose:

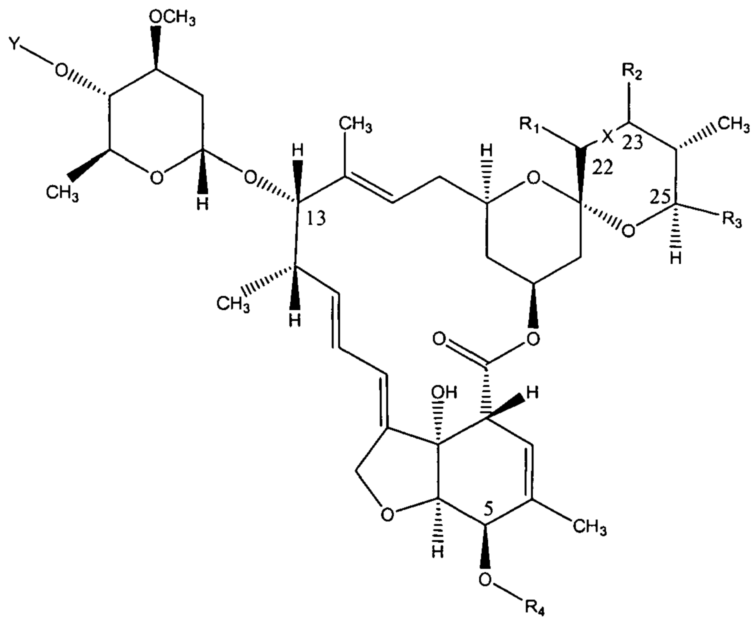

(1)

When X represents a double bond, the substituents $R_1$ and $R_2$ on the C-22 and C-23 positions are not present. Illustrative substituents in the above formula (1) are those where Y represents an optionally substituted sugar or aminosugar unit, $R_1$ represents H, $R_2$ represents H or hydroxy, $R_3$ represents alkyl or cycloalkyl and $R_4$ represents H or alkyl. Examples of avermectins falling within the general structure (1) are:

| Name | Y | $-C22R_1-X-C23R_2$ | $R_3$ | $R_4$ |
|---|---|---|---|---|
| Avermectin $A_{1a}$ | 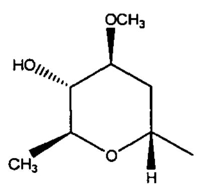 | -CH=CH- | sec-Butyl | $CH_3$ |
| Avermectin $A_{1b}$ | 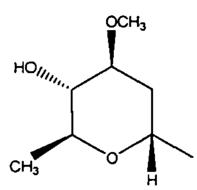 | -CH=CH- | iso-Propyl | $CH_3$ |
| Avermectin $A_{2A}$ | 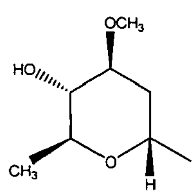 | $-CH_2-CHOH-$ | sec-Butyl | $CH_3$ |
| Avermectin $A_{2b}$ | 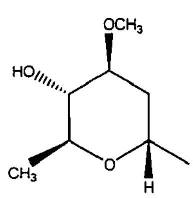 | $-CH_2-CHOH-$ | iso-Propyl | $CH_3$ |

(continued)

| Name | Y | $-C22R_1-X-C23R_2$ | $R_3$ | $R_4$ |
|---|---|---|---|---|
| Avermectin $B_{1a}$ | 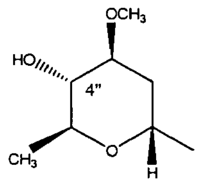 | -CH=CH- | sec-Butyl | H |
| Avermectin $B_{1b}$ | 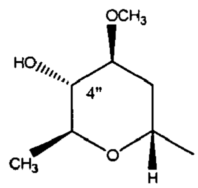 | -CH=CH- | iso-Propyl | H |
| Avermectin $B_{2A}$ | 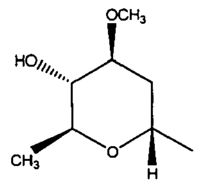 | $-CH_2-CHOH-$ | sec-Butyl | H |
| Avermectin $B_{2b}$ | 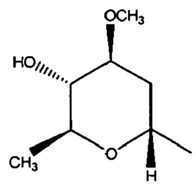 | $-CH_2-CHOH-$ | iso-Propyl | H |
| Ivermectin $B_{1a}$ | 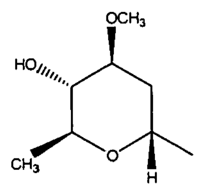 | $-CH_2-CH_2-$ | sec-Butyl | H |
| Ivermectin $B_{2A}$ | 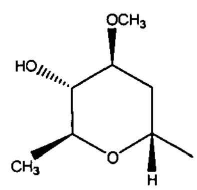 | $-CH_2-CH_2-$ | iso-Propyl | H |
| Doramectin | 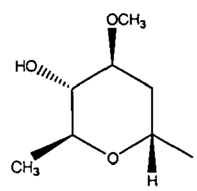 | -CH=CH- | Cyclohexyl | H |

(continued)

| Name | Y | $-C22R_1-X-C23R_2$ | $R_3$ | $R_4$ |
|---|---|---|---|---|
| Emamectin $B_{1a}$ | 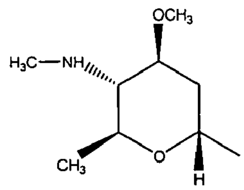 | -CH=CH- | sec-Butyl | H |
| Emamectin $B_{1b}$ | 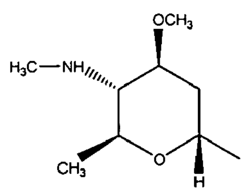 | -CH=CH- | iso-Propyl | H |
| Eprinomectin $B_{1a}$ | 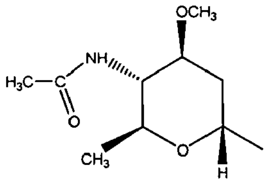 | -CH=CH- | sec-Butyl | H |
| Eprinomectin $B_{1b}$ | 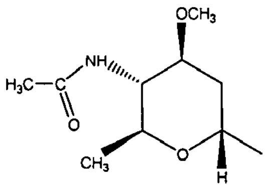 | -CH=CH- | iso-Propyl | H |

Another avermectin is Selamectin known from United States patent no. US 5,981,500. Yet another group of avermectins are those disclosed in US patent no. 6,933,260, which are derivatives of the avermectins $B_1$ having an aminosulfonyloxy substituent in the 4"-position as indicated above. Avermectin compounds wherein the substituent at the 5-position in the above formula (1) is a substituted oximino group or the keto group are also known. When appropriate, the avermectins also include various salt forms thereof, e.g. Emamectin as its benzoate salt.

The milbemycins differ structurally from the avermectins, mainly in the absence of the sugar residue on the C-13 carbon. Milbemycins are produced by fermentation of *Streptomy*ces species, which further can be altered by synthetic means (e.g. Lepimectin). Milbemycins include Milbemectin and Milbemycin oxime, the latter produced by fermentation of the actinomycete *Streptomyces hygroscopicos aureolacrimosus,* and Moxidectin, produced chemical modification of Nemadectin, a product of fermentation of *Streptomyces cyanogriseus noncyanogenus.* The individual milbemycins, either naturally derived or prepared by synthetic means, are also usually mixtures of several major components. For instance Milbemectin is a mixture of two major components designated as $A_3$ and $A_4$. Milbemycins are known, for example, from United States patent nos. US 3,950,360; 4,547,520, US 4,900,753; US 5,346,918; US 5,428,034; US 4,587,247; US 5,405,867; US 5,276,033; US 4,945,105; US 4,963,582; US 4,869,901 and US 5,614,470.

The spinosyns are also fermentation products produced by *Saccharopolyspora spinosa* including those synthetically derived thereof including various salt forms. The natural spinosyns are often referred to as spinosyn A, spinosyn B, spinosyn C, spinosyn D, spinosyn E etc.

The structure of the spinosyns can be illustrated by the general formula (2)

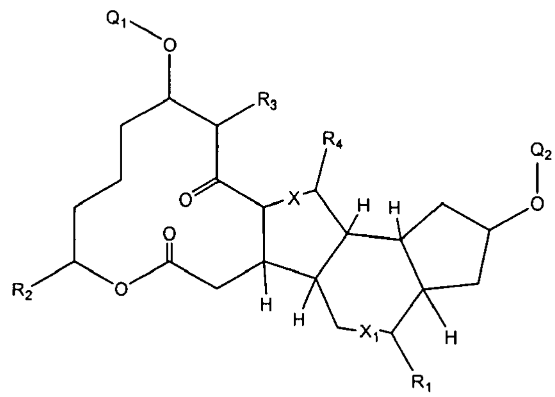

(2)

wherein X and $X_1$ represents a single or double bond or an epoixide unit; $Q_1$ and $Q_2$ represents an optionally substituted sugar or aminosugar unit or H; $R_1$, $R_2$, $R_3$ and $R_4$ represents H or (halo)alkyl, cycloalkyl, alkylcarbonyl, alkylamino or alkylhydroxylamino.

Spinosyn compounds are, for example, known from United States patents nos. 5,496,931; US 5,539,089 and US 5,670,364 and PCT application no. WO 97/00265-A1. The spinosyns are usually mixtures of several major components. A commercially available spinosyn is the compound Spinosad which is a mixture of spinosyn A and spinosyn D.

In United States patent no. US 4,560,677 synergistic compositions are disclosed comprising avermectins or milbemycins and a synergist selected among agricultural spray oils.

The use of Vitamin E and Niacin as dietary supplements and as antioxidants is well known. However other functions have been described as well. Vitamin E used as an agent to increase the resistance in plants against pests and pathogens is known from United States patent no. US 5,004,493. In German patent application no. DE 4437945-A1 it is suggested to use Vitamin E to protect plants against injury from other pesticides (i.e. as a safener compound). PCT publication no. WO 2004/95926-A2 describes the use of antioxidants in treatment of plants and plant propagation material to improve plant health and yield The use of Vitamin E(acetate) as a stabilizer in veterinary formulations comprising avermectins is known from United States patent no. US 6,340,672, PCT publication no. WO 2005/37294-A1 and Brazilian patent publication no. BR PI-0102125. The latter disclose the use of a nutritive composition comprising Ivermectin and vitamin E for the treatment of parasites in farm animals, which composition further comprises e.g. mineral salts, amino acids and vitamins,

There is an increasing demand and need for compounds and combinations thereof which can be used as active agents in pesticidal products, particularly against pests which afflict beneficial crops and domestic animals or their environs, and which are effective at low application rates, selective in biologic action and have low toxicity and a high margin of safety to humans, crops, economic animals, aquatic organisms and birds. Such compounds and combinations must be both environmentally friendly in that there must be demonstrably low impacts on the environment, as well as economically viable to use on a large scale. Further, there must be none or little insect resistance to such compounds or combinations. There is always a need for improved materials which are not only more effective against particular pests, but which are also versatile and can be used to combat a wide spectrum of pests. Such improvements are seldom achieved by the use of a single pesticidal active ingredient. Nevertheless, whether mixtures of pesticides or single individual pesticides are employed, it is always of great value to find some manner in which their pesticidal activity can be enhanced. The invention as described herein answers those needs.

## Description of the invention

It has now surprisingly been found that by combining Glutamate- or GABA-gated chloride channel agonist pesticides (A) with at least one compound B which is selected among Vitamin E and Niacin an enhanced pesticidal activity of the chloride channel agonist pesticides is observed when used for the control of harmful pests, i.e. a synergistic interaction between the chloride channel agonist pesticides and the compound(s) B is observed.

In one embodiment, the invention relates to a method for controlling harmful pests comprising exposing said harmful pests to an effective amount of a synergistic combination of at least one compound A which is selected among Glutamate- or GABA-gated chloride channel agonist pesticides and at least one compound B which is selected among Vitamin E and Niacin. Within this embodiment is a method for controlling harmful agricultural pests in beneficial crops comprising exposing said beneficial crops or harmful agricultural pests to an effective amount of a synergistic combination of at least one compound A which is selected among Glutamate- or GABA-gated chloride channel agonist pesticides and at least one compound B which is selected among Vitamin E and Niacin.

In another embodiment, the invention relates to a composition comprising at least one compound A which is selected among Glutamate- or GABA-gated chloride channel agonist pesticides and at least one compound B which is selected among Vitamin E and Niacin, wherein the compounds A and B are present in a synergistically effective amount. Within this embodiment is an agrochemical composition comprising at least one compound A which is selected among Glutamate- or GABA-gated chloride channel agonist pesticides and at least one compound B which is selected among Vitamin E and Niacin, wherein the compounds A and B are present in a synergistically effective amount.

In yet another embodiment, the invention relates to the use of a composition comprising a synergistic effective amount of at least one compound A which is selected among Glutamate- or GABA-gated chloride channel agonist pesticides and at least one compound B which is selected among Vitamin E and Niacin for the manufacture of a medicament for the control of pests in humans or domestic animals or their environs such as farmyard structures, dairy sheds, stables, poultry sheds, pig sties, dog and cat kennels and houses where dogs and cats are kept.

In yet a further embodiment the invention relates to the use of a composition comprising a synergistic effective amount of at least one compound A which is selected among Glutamate- or GABA-gated chloride channel agonist pesticides and at least one compound B which is selected among Vitamin E and Niacin for the protection of beneficial crops against agricultural pests, such crops include cereals, such as wheat, barley, rye, oats, rice, maize and sorghum; beet, such as sugar beet and fodder beet; fruit, e.g. pomes, stone fruit and soft fruit, such as apples, pears, plums, peaches, almonds, cherries and berries, e.g. strawberries, raspberries and blackberries; leguminous plants, such as beans, lentils, peas and soybeans; oil plants, such as rape, mustard, poppy, olives, sunflowers, coconut, castor oil, cocoa and groundnuts; cucurbitaceae, such as marrows, cucumbers and melons; fibre plants, such as cotton, flax, hemp and jute; citrus fruits, such as oranges, lemons, grapefruit and mandarins; vegetables, such as spinach, lettuce, asparagus, cabbages, carrots, onions, tomatoes, potatoes and paprika; lauraceae, such as avocado, cinnamon and camphor; and tobacco, nuts, coffee, aubergines, sugar cane, tea, pepper, vines, hops, bananas, natural rubber plants and ornamentals; as well as seeds of such crops. Within the scope of this invention such crops and seeds further comprise those that are resistant, either by transgenic means or selected by classical means, to pesticidal active ingredients and/or those that are resistant to certain pests, for example *Bacillus thuringiensis(Bt)* pest-resistant crops.

Among preferred Glutamate- or GABA-gated chloride channel agonist pesticides according to the invention are pesticidal active avermectins, milbemycines and spinosyns. Among preferred avermectins are Abamectin, Aversectin C, Doramectin, Emamectin (optionally in the form of its benzoate salt), Eprinomectin, Ivermectin and Selamectin, and especially selected among Abamectin, Aversectin C, Ivermectin and Emamectin (optionally in the form of its benzoate salt) with Abamectin being the most preferred choice. Among preferred milbemycines are Milbemectin, Milbemycin oxime, Moxidectin, Lepimectin and Nemadectin. The preferred spinosyn is Spinosad.

It is to be understood that the pesticides useful according to the present invention does not necessarily need to have the Glutamate- or GABA-gated chloride channel agonistic effect as its primary mode of action. Spinosad as an example is believed to have an effect on both the GABA-gated chloride channel as well as targeting the nicotinic acetylcholine receptor (see for example PCT application no. WO 01/70028-A1, especially p. 8, 1. 27). Thus, the primary requirement for a suitable pesticidal compound according to the present invention is that it interferes agonistically with the function of the Glutamate- or GABA-gated chloride channel.

Use of mixtures of Vitamin E and Niacin may be applied, but is preferably used as single components with use of Vitamin E solely as the component B being most preferred.

As used herein the term "Vitamin E" is meant to include all tocopherol and tocotrienol derivatives and isomers, and salts and esters thereof, and include α-tocopherol, β-tocopherol, γ-tocopherol, δ-tocopherol, tocotrienol, α-tocotrienol, β-tocotrienol, γ-tocotrienol, δ-tocotrinol, as well as acetates thereof (e.g. tocopherol acetate, also known as tocopheryl acetate) and succinates (e.g. tocopherol succinate). The term also includes the individual compounds (naturally occurring or synthetic prepared) as well as mixtures thereof. By the term "Niacin", also referred to as Vitamin B3, is meant nicotinacid as well as derivatives thereof such as amides, esters, and hydroxynicotinic- and hydroxyisonicotinic-acids and salts thereof and include, by example, niacinamide (nicotinamide), acipimox, aluminum nicotinate, niceritrol, nicoclonate, nicomol, inositol hexaniacinate and oxiniacic acid. The term also includes the individual compounds (naturally occurring or synthetic prepared) as well as mixtures thereof.

The compositions according to the invention have a good plant tolerance and favorable toxicity toward warm blooded animals and are suitable for combating human and animal pests, in particular insects, arachnids and nematodes, particularly preferably for combating pests, and their development stages, which occur in agriculture, in forests, in the protection of stored products, including plant seeds, and materials and from the hygiene sector, with use in agriculture being most preferred. They are active against normally sensitive and resistant types and against all or individual development stages. The abovementioned pests include: From the order of the Isopoda, for example *Oniscus asellus, Armadillidium vulgare* and *Porcellio scaber.* From the order of the Diplopoda, for example *Blaniulus guttulatus.* From the order of the Chilopoda, for example *Geophilus carpophagus* and Scutigera spp. From the order of the Symphyla, for example *Scutigerella immaculata.* From the order of the Thysanura, for example *Lepisma saccharina.* From the order of the Collembola, for example *Onychiurus armatus.* From the order of the Orthoptera, for example *Blatta orientalis,*

*Periplaneta americana, Leucophaea maderae, Blatella germanica, Acheta domesticus,* Gryllotalpa spp., *Locusta migratoria migratorioides, Melanoplus differentialis* and *Schistocerca gregaria.* From the order of the Dermaptera, for example *Forficula auricularia.* From the order of the Isoptera, for example *Reticulitermes* spp. From the order of the Anoplura, for example *Phylloera vastatrix,* Pemphigus spp., *Pediculus humanus corporis,* Haematopinus spp. and Linognathus spp. From the order of the Mallophaga, for example Trichodectes spp. and Damalinea spp. From the order of the Thysanoptera, for example *Hercinothrips femoralis* and *Thrips tabaci.* From the order of the Heteroptera, for example Eurygaster spp., *Dysdercus intermedius, Piesma quadratum, Cimex lectularius, Rhodnius prolixus* and Triatoma spp. From the order of the Homoptera, for example *Aleurodes brassicae, Bemisia tabaci, Trialeurodes vaporariorum, Aphis gossypii, Brevicoryne brassicae, Cryptomyzus ribis, Doralis fabae, Doralis pomi, Eriosoma Lanigerum, Hyalopterus arundinis, Macrosiphum avenae,* Myzus spp., *Phorodon humuli, Rhopalosiphum padi,* Empoasca spp., *Euscelus bilobatus, Nephotettix cincticeps, Lecanium corni, Saissetia oleae, Laodelphax striatellus, Nilaparvata lugens, Aonidiella aurantii, Aspidiotus hederae,* Pseudococcus spp. and Psylla spp. From the order of the Lepidoptera, for example *Pectinophora gossypiella, Bupalus piniarius, Cheimatobia brumata, Lithocolletis blancardella, Hyponomeuta padella, Plutella maculipennis, Malacosoma neustria, Euproctis chrysorrhoea,* Lymantria spp., *Bucculatrix thurberiella, Phyllocnistis citrella,* Agrotis spp., Euxoa spp., Feltia spp., *Earias insulana,* Heliothis spp., *Laphygma exigua, Mamestra brassicae, Panolis flammea, Prodenia litura,* Spodoptera spp., *Trichoplusia ni, Carpocapsa pomonella,* Pieris spp., Chilo spp., *Pyrausta nubilialis, Ephestia kuehniella, Galleria mellonella, Cacoecia podana, Capua reticulana, Choristoneura fumiferana, Clysia ambiguella, Homona magnanima* and *Tortrix viridana.* From the order of the Coleoptera, for example *Anobium punctatum, Rhizopertha dominica, Bruchidius obtectus, Acanthoscelides obtectus, Hylotrupes bajulus, Agelastica alni, Leptinotarsa decemlineata, Phaedon cochleariae,* Diabrotica spp., *Psylliodes chrysocephala, Epilachna varivestis,* Atomaria spp., *Oryzaephilus surinamensis,* Anthonomus spp., Sitophilus spp., *Otiorrhynchus sulcatus, Cosmopolites sordidus, Ceuthorrhynchus assimilis, Hypera postica,* Dermestes spp., Trogoderma spp., Anthrenus spp., Attagenus spp., Lyctus spp., *Meligethes aeneus,* Ptinus spp., *Niptus hololeucus, Gibbium psylloides,* Tribolium spp., *Tenebrio molitor,* Agriotes spp., Conoderus spp., *Melolontha melolontha, Amphimallon solstitialis* and *Costelytra zealandica.* From the order of the Hymenoptera, for example Diprion spp., Hoplocampa spp. Lasius spp., *Monomorium pharaonis* and Vespa spp. From the order of the Diptera, for example Aedes spp., Anopheles spp., Culex spp., *Drosophila melanogaster,* Musca spp., Fannia spp., *Calliphora erythrocephala,* Lucilia spp., Chrysomyia spp., Cuterebra spp., Gastrophilus spp., Hypobosca spp., Stomoxys spp., Oestrus spp., Hypoderma spp., Tabanus spp., Tannia spp., *Bibio hortulanus, Oscinella frit,* Phorbia spp., *Pegomyia hyoscyami, Ceratitis capitata, Dacus oleae* and *Tipula paludosa.* From the order of the Siphonaptera, for example *Xenopsylla cheopis* and Ceratophyllus spp. From the order of the Arachnida, for example *Scorpio maurus* and *Latrodectus mactans.* From the order of the Spirurida, for example *Onchocerca volvulus, Dirofilaria immitis* and *Wuchereria bancrofti.*

Combinations of at least one compound A with the at least one compound B are particularly suitable for use against pests from the genera Plutella sp., Spodoptera sp., Alabama sp., Anticarsia sp., Pseudoplusia sp., Pieris sp., Scrobipalpua sp., Trichoplusia sp., Choristoneura sp., Lymantria sp., Laspeyresia sp., Psylla sp., Epilachna sp., Leptinotarsa sp., Liriomyza sp., Bemisia sp., Trialeurodes sp., for example in cotton, soya, vegetable, fruit, citrus, wine and maize crops.

It is also possible to control various types of spider mites, such as the fruit tree spider mite *(Panonychus ulmi),* the citrus spider mite *(Panonychus citri)* and the common spider mite *(Tetranychus urticae)*

A pronounced effect of the Glutamate- or GABA-gated chloride channel agonist pesticides when used in combination with the at least one compound B is the increased knock-down-effect on pests when exposed to combination products according to the invention (i.e. the pests are rapidly paralyzed) which is highly beneficial in pest control. Even those pests which may not receive a lethal dose through a very brief contact will, nevertheless, be sufficiently immobilized long enough for them to become either easy prey to predators, such as birds, or to suffer death by desiccation.

Compositions containing the compound(s) A and the compound(s) B may be employed in any conventional form, for example, in the form of a twin pack, or as an emulsifiable concentrate, an oil-in-water emulsion, soluble concentrate, suspension concentrate, microemulsion, wettable powder, ready-to-spray solution, soluble granule, water-dispersible granule, creams, soaps, waxes, tablets or pour-on-formulations. Such compositions can be formulated using adjuvants and formulation techniques that are known in the art for individually formulating the compounds A and B. For example, the compounds A and B may be mixed together, optionally with other formulating ingredients.

The compositions may contain a diluent, which may be added during the formulation process, after the formulation process (e.g. by the user - a farmer or custom applicator), or both. The term diluent includes all liquid and solid agriculturally or pharmaceutically (including veterinary medicines) acceptable material-including carriers which may be added to the compound A or compound B to bring them in a suitable application or commercial form. Examples of suitable solid diluents or carriers are aluminium silicate, talc, calcined magnesia, kieselguhr, tricalcium phosphate, powdered cork, absorbent carbon black, chalk silica, and clays such as kaolin and bentonite. Examples of suitable liquid diluents include water, organic solvents (e.g. acetophenone, cyclohexanone, isophorone, toluene, xylene, petroleum distillates, alcohols, amines, acids and esters), and mineral, animal, and vegetable oils as well as derivatives thereof

(used alone or in combination). The compositions may also contain surfactants, protective colloids, thickeners, penetrating agents, stabilizers, sequestering agents, anti-caking agents, coloring agents, corrosion inhibitors, and dispersants such as lignosulfite waste liquors and methylcellulose. The term surfactant, as used herein, means an agriculturally or pharmaceutically acceptable material which imparts emulsifiability, stability, spreading, wetting, dispersibility or other surface-modifying properties. Examples of suitable surfactants include lignin sulfonates, fatty acid sulfonates (e.g. lauryl sulfonate), the condensation product of formaldehyde with naphthalene sulfonate, alkylarylsulfonates, ethoxylated alkylphenols, and ethoxylated fatty alcohols. Other known surfactants that have been used with insecticides or pharmaceuticals (including veterinary medicines) are also acceptable.

When mixed with additional components, the composition typically contains about 0.01 to about 90% by weight of compound(s) A and compound (s) B, about 0 to about 30% agriculturally/pharmaceutically acceptable surfactants, and about 10 to 99.99% solid or liquid diluents. The compositions may additionally contain other additives known in the art, such as pigments, thickeners and the like.

The compositions may be applied in various combinations of the compound(s) A and compound(s) B. For example, they may be applied as a single "ready-mix" form, or in a combined spray mixture composed from separate formulations of the compounds A and B, e.g. a "tank-mix" form. Thus, to be used in combination, it is not necessary that the compound(s) A and B, be applied in a physically combined form, or even at the same time, i.e. the compounds may be applied in a separately and/or sequentially application, provided that the application of the second compound occurs within a reasonable period of time from the application of the first compound. The combination effect results so long as the compounds A and B are present at the same time, regardless of when they were applied. Thus, for instance, a physical combination of the compounds could be applied, or one could be applied earlier than the other so long as the earlier-applied ingredient is still present on the pest to be controlled, on the plant or in the soil surrounding the plant infested or susceptible of being infested with the pest to be controlled when the second ingredient is applied, and so long as the weight ratio of available ingredients A and B falls within that disclosed and claimed herein. The order of applying the individual compounds A and B is not essential.

Rates of application of the composition will vary according to prevailing conditions such as targeted pests, degree of infestation, weather conditions, soil conditions, crop species, animal to be treated, mode of application, and application time. Compositions containing the compounds A and B may be applied in the manner which they are formulated, as discussed above. For example, they may be applied as sprays, such as water-dispersible concentrates, wettable powders, water-dispersible granules or as creams, soaps, waxes, tablets and pour-on-formulations. The compositions may also be applied topically, orally, by stomach intubation or by injection, especially when applied on domestic animals such as sheep, pigs, cattle, horses, goats, dogs, cats and poultry for the control of internal and/or external harmful pests.

The weight ratio of compound(s) A to compound(s) B is selected to provide a synergistic pesticidal action, i.e. the compound(s) B be is present in an activity enhancing amount with respect to compound(s) A. In general, the weight ratio of A:B ranges from about 20:1 to about 1:30, preferably 10:1 to 1:20, more preferably from about 1:1 to about 1: 15, and even more preferably from about 1:1 to about 1:10. In particular are those ratios preferred where the compound (s) B are in excess of the compound(s) A.

The weight ratio of A:B will depend on various factors such as the mode of application, the harmful pests to be combated, the useful plant to be protected, the animal infested with harmful pests, the application time, etc.

An effective amount of compound(s) A and compound(s) B is any amount that has the ability to combat the harmful pests, e.g. an amount which is sufficient to cause a measurable reduction in the exposed pest population. When used in crop protection effective aggregate combined amounts of the compounds A and B range from about 0.01 to about 2000 g/ha, preferably 0.1 to 1500 g/ha, more preferably 1-1000 g/ha and even more preferably 2-800 g/ha.

When used in treatment of animals against pests effective aggregate combined amounts of the compounds A and B range from about 0.1 to 1000 mg pr kg of animal bodyweight.

Additional insecticides and acaricides may also be used provided that the additional insecticide/acaricide does not interfere with the synergistic relationship between the compounds A and B. The presence of the compound(s) B may also enhance the activity of such additional active ingredient(s). An additional insecticide or acaricide may be utilized if broadening of the spectrum of control or preventing the build-up of resistance is desired. Suitable examples of such additional active compounds are:

acephate, acetamiprid, acrinathrin, alanycarb, aldicarb, alphamethrin, amitraz, azadirachtin, azinphos, azocyclotin, Bacillus thuringiensis, bendiocarb, benfuracarb, bensultap, betacyfluthrin, bifenazate, bifenthrin, bistrifluron, BPMC, brofenprox, bromophos, bufencarb, buprofezin, butocarboxin, butylpyridaben,

cadusafos, carbaryl, carbofuran, carbophenothion, carbosulfan, cartap, chloethocarb, chloroethoxyfos, chlorfenapyr, chlorofenvinphos, chlorofluazuron, chloromephos, chlorpyrifos, chromafenozide, cis-resmethrin, clothianidin, clocythrin, clofentezine, cyanophos, cycloprothrin, cyfluthrin, cyhalothrin, cyhexatin, cypermethrin, cyromazine, deltamethrin, demeton, difenthiuron, diazinon, dichlofenthion, dichlorvos, dicliphos, dicrotophos, diethion, diflubenzuron, dimethoate, dimethylvinphos, dinotefuran, dioxathion, disulfoton,
edifenphos, esfenvalerate, ethiofencarb, ethion, ethofenprox, ethoprophos, etoxazole, etrimphos,
fenamiphos, fenzaquin, fenbutatin oxide, fenitrothion, fenobucarb, fenothiocarb, fenoxycarb, fenpropathrin, fenpyrad, fenpyroximate, fenthion, fenvalerate, flonicamid, fluazinam, fluazuron, flucycloxuron, flucythrinate, flufenoxuron, flufenprox, fluvalinate, fonophos, formothion, fosthiazate, fubfenprox, furathiocarb,
gamma-cyhalothrin,
heptenophos, hexaflumuron, hexythiazox,
imidacloprid, indoxacarb, iprobenfos, isazophos, isofenphos, isoprocarb, isoxathion,
lambda-cyhalothrin, lufenuron,
malathion, mecarbam, mevinphos, mesulfenphos, metaldehyde, methacrifos, methamidophos, methidathion, methiocarb, methomyl, methoxyfenozide, metolcarb, milbemectin, monocrotophos, moxidectin,
naled, nitenpyram,
omethoate, oxamyl, oxydemethon M, oxydeprofos,
parathion A, parathion M, permethrin, phenthoate, phorate, phosalone, phosmet, phosphamidon, phoxim, pirimicarb, pirimiphos, profenofos, promecarb, propaphos, propoxur, prothiofos, prothoate, pymetrozin, pyrachlophos, pyridaphenthion, pyresmethrin, pyrethrum, pyridaben, pyrimidifen, pyriproxifen,
quinalphos,
salithion, sebufos, silafluofen, spirodiclofen, spirotetratmat, sulfotep, sulprofos,
tebufenozid, tebufenpyrad, tebupirimiphos, teflubenzuron, tefluthrin, temephos, terbam, terbufos, tetrachlorvinphos, thiacloprid, thiafenox, thiamethoxam thiodicarb, thiofanox, thiomethon, thionazin, thuringiensin, tralomethrin, triarathen, triazophos, triazuron, trichlorfon, triflumuron, trimethacarb,
vamidothion, XMC, xylylcarb, zetamethrin.

Further, inclusion of other known active compounds, such as herbicides, fungicides, fertilisers or growth regulators, is also possible.

In one embodiment the composition according to the invention is a composition for controlling or combating pests on plants comprising at least one compound A, which is selected among Glutamate- or GABA-gated chloride channel agonist pesticides, and at least one compound B, selected among Vitamin E and Niacin, wherein the compounds A and B are present in synergistically effective amounts. In this embodiment the compositions are suitable formulated according to well known principles within the area for formulation of compositions for pesticides.

In another embodiment the composition according to the invention is a composition for controlling or combating pests in or on animals including humans, said composition comprising at least one compound A, which is selected among Glutamate- or GABA-gated chloride channel agonist pesticides, and at least one compound B, selected among Vitamin E and Niacin, wherein the compounds A and B are present in synergistically effective amounts. In this embodiment the compositions are suitable formulated according to well known principles within the area. The ingredients used for such compositions in addition to the compounds A and the compounds B should be selected in order to avoid inadvertent reaction to the animal being treated such as skin irritation etc. The skilled person will appreciate how selecting suitable ingredients for such compositions. Such compositions will typically comprise a solvent or a carrier. It is preferred that the composition does not comprise a pyrrolidone solvent in combination with a solvent selected from the group consisting of diethylene glycol monobutyl ether, benzyl benzoate, isopropyl alcohol and xylenes. The compositions may further comprise a colorant, which facilitates application of the compositions on the animals since the person applying the compositions easily can see where the composition already has been applied.

In still another embodiment is the composition according to the invention a composition for controlling or combating pests in animals including humans, said composition comprising at least one compound A, which is selected among Glutamate- or GABA-gated chloride channel agonist pesticides, and at least one compound B, selected among Vitamin E and Niacin, wherein the compounds A and B are present in synergistically effective amounts. In this embodiment the compositions are suitable formulated according to well known principles within the area. The ingredients used for such compositions in addition to the compounds A and the compounds B should be pharmaceutically acceptable or acceptable according to veterinary standards as the skilled person within the area will appreciate. Such compositions will typically comprise a solvent or a carrier. It is preferred that the composition does not comprise a pyrrolidone solvent in combination with a solvent selected from the group consisting of diethylene glycol monobutyl ether, benzyl benzoate, isopropyl alcohol and xylenes.

In a further aspect the invention relates to a kit comprising a first composition comprising at least one compound A, and a second composition comprising at least one compound B. In this connection the term "a kit" is intended to mean a collection of at least two items intended for coordinated use, i.e. for use as a mixture or for a specified consecutive use. The components of the kit may be provided in one package, or it may be provided in separate packages. Further the kit usually comprises written instruction for the intended use.

A synergistic effect exists whenever the action of a combination of two chemicals is greater than the sum of

the action of each of the chemicals alone. Therefore, a synergistic combination is a combination of chemical components having an action that is greater than the sum of the action of each chemical component alone, and a synergistically effective amount is an effective amount of a synergistic combination. Synergism can involve either 2 pesticides, or one pesticide plus a substance that is not by itself toxic to the pest, and such a substance is termed a synergist, i.e. a chemical that enhances the toxicity of a pesticide to a pest.

Well-known methods for determining whether synergy exists include the Colby method, the Tammes method and the Wadley method, all of which are described below. Any one of these methods may be used to determine if synergy exists between the compounds A and B. In the Colby method, also referred to as the Limpels method, the action to be expected E for a given active ingredient combination obeys the so-called Colby formula. According to Colby, the expected action of ingredients A+B using p+q ppm of active ingredient is:

$$E = X + Y - \frac{X \cdot Y}{100}$$

where ppm=milligrams of active ingredient (=a.i.) per liter of spray mixture X=% action by component A using p ppm of active ingredient Y=% action by component B using q ppm of active ingredient. If the ratio R defined as the action actually observed (O) divided by the expected action (E) is >1 then the action of the combination is superadditive, i.e. there is a synergistic effect. For a more detailed description of the Colby formula, see Colby, S. R. "Calculating synergistic and antagonistic responses of herbicide combination," Weeds, Vol. 15, pages 20-22; 1967; see also Limpel et al., Proc. NEWCC 16: 48-53 (1962).

The Tammes method uses a graphic representation to determine whether a synergistic effect exists. See "Isoboles, a graphic representation of synergism in pesticides," Netherlands Journal of Plant Pathology, 70 (1964) p. 73-80.

The Wadley method is based on comparison of an observed ED50 value (i.e. dose of a given compound or combination of compounds providing 50% pest control) obtained from experimental data using the dose response curves and an expected ED50 calculated theoretically from the formula:

$$ED50(A+B)_{exp} = \frac{a+b}{\frac{a}{ED50(A)_{obs}} + \frac{b}{ED50(B)_{obs}}}$$

wherein a and b are the weight ratios of compound A and B in the mixture and $ED50_{obs}$ is the experimentally determined ED50 value obtained using the dose response curves for the individual compounds. The ratio $ED50(A+B)_{expected}/D50(A+B)_{observed}$ expresses the factor of interaction (F) (synergy factor). In case of synergism, F is >1. The same formula applies when LD50 values are used, i.e. lethal dose, as well as EC50 values, i.e. effective concentration, and LC50 values, i.e. lethal concentration. For a more detailed description of the Wadley method, see Levi et al., EPPO-Bulletin 16, 1986, 651-657.

An alternative approach as mentioned by D.L. Richer (Pesticide Science, 1987, 19, 309-315, especially p. 313) to determine synergy is based on purely observed values rather than observed and theoretical calculated values as used in the previously mentioned methods. In this alternative method the effect of a given rate of the mixture A and B is compared with the effect of the same rate of each of A and B used alone. If synergism exists, the observed effect of the mixture will be greater than the observed effect of either component used alone:

$$E_{obs}(xA + yB) > E_{obs}(x+y)A, \text{ and } > E_{obs}(x+y)B$$

wherein x and y are the quantities of A and B in the mixture.

The documents specifically cited in the description are incorporated by reference into the description. The invention is illustrated by the following examples, which are provided for illustratory purposes and should not be construed as limiting for the invention:

## EXAMPLES

### Example 1

The efficacy of an Abamectin 18 g/l emulsifiable concentrate formulation (EC) was tested on *Spodoptera exiqua* larvae on *Tradescani crassifolia* leaves. The test on *Spodoptera exigua* was done as a dip-test where *Tradescani crassifolia* leaves were dipped in the various test solutions and dried. Afterwards, each leaf was infested with 5 *Spodoptera exigua* larvae. The effect was evaluated after 72 hours and a dose response curve was constructed to obtain the LC50 of each treatment.
Besides testing the commercial Abamectin 18 g/l EC formulation, Abamectin 18 g/l EC formulation containing either 20 g/l or 60 g/l tocopheryl acetate, all-rac alpha, Ph. Eur. 5$^{th}$ Ed., a blank EC formulation, i.e. without Abamectin, and a blank EC formulation containing 60 g/l tocopheryl acetate, all-rac alpha, Ph. Eur. 5$^{th}$ Ed., were including in the test as well.

**Table 1**

Calculated LC50 values (total ppm Abamectin and tocopheryl acetate in the dip solutions) are shown for the Abamectin EC test on *Spodoptera exiqua* larvae on *Tradescani crassifolia* leaves.

| Formulation | $LC50_{obs}$ (ppm) | $LC50_{exp}$(ppm) | F(exp/obs) |
|---|---|---|---|
| Abamectin 18 g/l EC | 38.65 | | |
| Abamectin 18 g/l EC + 20 g/l tocopheryl acetate | 34.45 (16.32ppm Abamectin + 18.13ppm Tocopheryl acetate) | 78.2 | 2.27 |
| Abamectin 18 g/l EC +60 g/l tocopheryl acetate | 27.65 (6.38ppm Abamectin + 21.27ppm Tocopheryl acetate) | 148.4 | 5.37 |
| Blank EC | > 1000 | | |
| Blank EC + 60 g/l tocopheryl acetate | > 1000 | | |

From the Abamectin 18 g/l EC and the tocopheryl acetate 60 g/l LC50 values expected LC50 values were calculated according to Wadley's formula. The corresponding F-values in the above table show a synergistic insecticidal effect of Abamectin and tocopheryl acetate on the *Spodoptera exiqua* larvae for both mixtures.

### Example 2

The efficacy of experimental Abamectin 18 g/l oil-in-water formulations (EW) was tested on *Spodoptera exiqua* larvae on *Tradescani crassifolia* leaves. A mixture of methylated fatty acid and octanol was applied as solvent for the Abamectin in the EW formulation.
The test on *Spodoptera exigua* was as described in example 1. The effect was evaluated after 72 hours and a dose response curve was constructed to obtain the LC50 of each treatment.
Besides testing the Abamectin 18 g/l EW formulation, Abamectin 18 g/l EW formulations containing either 20 g/l or 60 g/l tocopheryl acetate, all-rac alpha, Ph. Eur. 5$^{th}$ Ed., and an 18g/l tocopheryl acetate EW without Abamectin, were tested as well.

**Table 2**

Calculated LC50 values (total ppm Abamectin and tocopheryl acetate in the dip solutions) are shown for the Abamectin EW test on *Spodoptera exiqua* larvae on *Tradescani crassifolia* leaves.

| Formulation | $LC50_{obs}$ (ppm) | $LC50_{exp}$(ppm) | F(exp/obs) |
|---|---|---|---|
| Abamectin 18 g/l EW | 64.67 | | |

(continued)

| Calculated LC50 values (total ppm Abamectin and tocopheryl acetate in the dip solutions) are shown for the Abamectin EW test on *Spodoptera exiqua* larvae on *Tradescani crassifolia* leaves. | | | |
|---|---|---|---|
| Formulation | $LC50_{obs}$ (ppm) | $LC50_{exp}$(ppm) | F(exp/obs) |
| Abamectin 18g/1EW+ 20 g/l tocopheryl acetate | 15.64 (7.41ppm Abamectin + 8.23ppm tocopheryl acetate) | 79.4 | 5.08 |
| Abamectin 18 g/l EW + 60 g/l tocopheryl acetate | 17.98 (4.15ppm Abamectin + 13.83ppm tocopheryl acetate) | 88.8 | 4.94 |
| Blank EW + 18 g/l tocopheryl acetate | >100 | | |

From the observed LC50 values for Abamectin 18 g/l EW and tocopheryl acetate 18 g/l EW expected LC50 values for the mixtures were calculated according to Wadley's formula. The corresponding F-values in the above table show a synergistic insecticidal effect of Abamectin and tocopheryl acetate on the *Spodoptera exiqua* larvae for both mixtures.

**Example 3**

Dilutions of experimental Abamectin EW formulations with diethyl phthalate as solvent for the active ingredient were sprayed on bean plants *(Vicia faba)* in a spray cabinet and mites (*Tetranychus urticae*) were transferred to the plants after the leaf surfaces were dry. The degree of leaf damage was evaluated 7 days after the mites were placed on the plants, and ED50 values (g Abamectin and tocopheryl acetate/ha) were calculated for the Abamectin EW formulations tested, table 3. The ED50 values are based on % leaf damage.

**Table 3**

| Calculated ED50 (g Abamectin and tocopheryl acetate/ha) for the Abamectin EW formulation test on *Tetranychus urticae* on *Vicia faba.* ED50 values are based on % leaf damage. | | | |
|---|---|---|---|
| Formulation | $ED50_{obs}$ (g AI/ha) | $ED50_{exp}$(g AI/ha) | F(exp/obs) |
| Abamectin 18 g/l EW | 3.73 | | |
| Abamectin 18 g/l EW + 20 g/l tocopheryl acetate | 1.31 (0.62g Abamectin + 0.69g tocopheryl acetate) | 7.5 | 5.72 |
| Abamectin 18 g/l EW+ 60 g/l tocopheryl acetate | 4.68 (1.08g Abamectin + 3.6g tocopheryl acetate) | 14.0 | 2.99 |
| Blank EW + 18 g/l tocopheryl acetate | 79.4 | | |

From the observed ED50 values for Abamectin 18 g/l EW and tocopheryl acetate 18 g/l EW expected ED50 values for the mixtures were calculated according to Wadley's formula. The corresponding F-values in the above table show a synergistic insecticidal effect of Abamectin and tocopheryl acetate on *Tetranychus urticae* for both mixtures.

**Example 4**

A range of Abamectin solutions in acetone was prepared. Similarly, a range of tocopherol, all-rac alpha, solutions in acetone was prepared. Abamectin solution (2 μl), tocopherol solution (2 μl) or both were applied topically on nymphs of *Dysdercus cingulatus.* Abamectin was applied dorsally while tocopherol was applied ventrally. Acetone alone (4 μl) was applied to control nymphs in order to ensure that the acetone did not contribute to the mortality. The mortality of

the nymphs was recorded 24 h after applying the solutions. The observed and the expected results, according to the Colby-method, are tabulated below.

**Table 4**

| Observed and expected mortality for a mixture of Abamectin and tocopherol solutions in acetone, on *Dysdercus cingulatus* nymphs. Abamectin was applied dorsally and tocopherol ventrally. | | | | |
|---|---|---|---|---|
| Applied on each nymph | %Mortality for each ingredient | Observed mortality (%) | Expected mortality (%) | R(obs/exp) |
| 2000 ng Abamectin<br>2000 ng tocopherol | 74<br>0 | 100 | 74 | 1.35 |

According to table 4, the observed mortality was higher than the expected mortality for mixtures of Abamectin and tocopherol applied topically on nymphs of *Dysdercus cingulatus.* The superadditive effect was achieved although Abamectin was applied dorsally and tocopherol ventrally.

**Example 5**

A range of Abamectin solutions in acetone was prepared. Similarly, a range of tocopherol, all-rac alpha, solutions was prepared. Mixed solutions of Abamectin and tocopherol in acetone were prepared as well. Nymphs of *Dysdercus cingulatus* were treated topically with either an Abamectin acetone solution (2 μl), a tocopherol acetone solution (2 μl) or mixed solutions (2 μl). The *Dysdercus cingulatus* mortality was recorded 48h after applying the products. It was ensured that application of acetone alone (2 μl) did not affect the nymph mortality.
Log dose-mortality curves were constructed for the Abamectin and the tocopherol treatments. LD50 values based on the sum of Abamectin and tocopherol contents (ng active ingredient(s) per nymph) were calculated. The results are shown in table 5.

**Table 5**

| LD50 values (ng active ingredient(s) per nymph) for Abamectin, tocopherol and for mixtures of Abamectin and tocopherol. Mortality results on *Dysdercus cingulatus* were recorded 48 h after applying the ingredients. | | | |
|---|---|---|---|
| Treatment | $LD50_{obs}$ (ng AI(s) per nymph) | $LD50_{exp}$ (ng AI(s) per nymph) | F(exp/obs) |
| Abamectin | 1595 | | |
| Abamectin + tocopherol (1:1) | 1226 (613ng of each AI) | 2954 | 2.41 |
| Tocopherol | > 20,000 ng tocopherol | | |

From the observed LD50 values for Abamectin and tocopherol expected LD50 values for the mixtures were calculated according to Wadley's formula. The corresponding F-value in the above table shows a synergistic insecticidal effect of Abamectin and tocopherol on *Dysdercus cingulatus* nymphs for the mixture.

**Example 6**

A range of Ivermectin solutions in acetone was prepared. Similarly, a range of tocopherol solutions was prepared. Mixed solutions of Ivermectin and tocopherol in acetone were prepared as well. Nymphs of *Dysdercus cingulatus* were treated topically with either an Ivermectin acetone solution (2 μl), a tocopherol acetone solution (2 μl) or mixed solutions (2 μl). Control nymphs were treated with 2 μl acetone to ensure that the acetone did not affect the mortality.
The mortality was recorded after 24 and 48 h. The results are tabulated below. The results were evaluated by the Colby-method.

**Table 6**

| Observed and expected mortality for combinations of Ivermectin and tocopherol solutions in acetone on *Dysdercus cingulatus* nymphs. After 24 h | | | | |
|---|---|---|---|---|
| Applied per nymph | Mortality (%) for each ingredient | Observed mortality (%) | Expected mortality (%) | R(obs/exp) |
| 300 ng Ivermectin<br>300 ng tocopherol | 63<br>0 | 70 | 63 | 1.11 |
| 100 ng Ivermectin<br>100 ng tocopherol | 33<br>0 | 45 | 33 | 1.36 |
| 30 ng Ivermectin<br>30 ng tocopherol | 8<br>0 | 20 | 8 | 2.50 |
| After 48 h | | | | |
| Applied per nymph | Mortality (%) for each ingredient | Observed mortality (%) | Expected mortality (%) | R(obs/exp) |
| 300 ng Ivermectin<br>300 ng tocopherol | 86<br>0 | 100 | 86 | 1.16 |
| 100 ng Ivermectin<br>100 ng tocopherol | 65<br>0 | 75 | 65 | 1.15 |
| 30 ng Ivermectin<br>30 ng tocopherol | 27<br>0 | 35 | 27 | 1.30 |

According to table 6, the observed mortality was higher than the expected mortality (Colby method). The corresponding R-values show that Ivermectin and tocopherol exerted a synergistic effect on the *Dysdercus cingulatus* nymphs.

**Example 7**

A range of Abamectin solutions in acetone was prepared. Similarly, a range of nicotinamide solutions was prepared. Mixed solutions of Abamectin and nicotinamide in acetone were prepared as well. Nymphs of *Dysdercus cingulatus* were treated topically with either an Abamectin acetone solution (2 μl), a nicotinamide acetone solution (2 μl) or mixed solutions (2 μl). It was ensured that application of acetone (2 μl) did not affect the nymph mortality.
The *Dysdercus cingulatus* mortality was recorded 48 h after applying the products. Log dose-mortality curves were constructed for the Abamectin, the nicotinamide and for the mixed solutions. The LD50 values reflect the sum of Abamectin and nicotinamide (active ingredients) present at LD50.

**Table 7**

| LD50 values (ng active ingredient(s) per nymph) for Abamectin, nicotinamide and for mixtures of Abamectin and nicotinamide. The mortality results on *Dysdercus cingulatus* were recorded 48 h after applying the ingredients. | | | |
|---|---|---|---|
| Treatment | $LD50_{obs}$ (ng AI(s) per nymph) | $LD50_{exp}$ (ng AI(s) per nymph) | F(exp/obs) |
| Abamectin | 126 | | |
| Abamectin + nicotinamide (1:1) | 108.9<br>(54ng of each) | 251.0 | 2.31 |
| nicotinamide | > 20,000 | | |

From the observed LD50 values for Abamectin and nicotinamide expected LD50 values for the mixtures were calculated according to Wadley's formula. According to the observed LD50 values shown in table 7, nicotinamide had a low activity against the nymphs. However, when the nicotinamide was applied together with Abamectin, the two

compounds exerted a synergistic activity on the *Dysdercus cingulatus* nymphs as seen by the above F-value.

**Example 8**

The efficacy of an Abamectin 18 g/l emulsifiable concentrate formulation (EC) was tested on *Spodoptera exiqua* larvae on *Tradescani crassifolia* leaves. The test on *Spodoptera exigua* was done as a dip-test where *Tradescani crassifolia* leaves were dipped in the various tests solutions and dried. Afterwards, each leaf was infested with 5 *Spodoptera exigua* larvae.
Besides testing the Abamectin 18 g/l EC formulation, Abamectin 18 g/l EC formulation was tested together with 4.5 g/l and 72 g/l nicotinamide. An EC formulation comprising nicotinamide was included in the test as well. The observed mortalities are tabulated in table 8.

**Table 8**

| Expected and observed mortality for combinations of Abamectin and nicotinamide on *Spodoptera exigua* larvae in a *Tradescani crassifolia* dip test. | | |
|---|---|---|
| Concentration of ingredients in tests solutions | Observed mortality (%) | R(obs/exp) |
| 10 ppm Abamectin | 10 | |
| 7.5 ppm Abamectin<br>2.5 ppm nicotinamide | 45 | 4.5 |
| 2.5 ppm Abamectin<br>7.5 ppm nicotinamide | 15 | 1.5 |
| 10 ppm nicotinamide | 0 | |

The strongest toxin of the mixture in table 8 is Abamectin. Comparing the effect of the mixture of Abamectin and nicotinamide with the effect of Abamectin in the same dose as the total content of active; Abamectin + nicotinamide in the mixture it is seen that the effect of the mix is greater than the single component treatment with Abamectin. Applying the alternative approach as described previously, the results in table 8 show that Abamectin and nicotinamide exerted a synergistic action on *Spodoptera exigua* larvae.

**Example 9**

A range of Emamectin-benzoate and tocopherol, all-rac alpha, solutions with varying concentrations of each compound in acetone was prepared. Mixed solutions of Emamectin-benzoate and tocopherol, all-rac alpha, were also prepared. Larvae of *Spodoptera exiqua* were treated topically with either an Emamectin-benzoate acetone solution (1 μl), a tocopherol acetone solution (1 μl) or a solution containing both of the two compounds in the ratios 1:1 and 1:3 (1 μl). Log dose-mortality curves were constructed for the Emamectin-benzoate solutions, the tocopherol solutions and the mixtures. The mortality was recorded 48 h after applying the products and an LD50 value was calculated. A comparison was made between the actual observed LD50 and the expected value, based on the Wadley method as described previously. The results of the *Spodoptera exiqua* test are shown in the table below.

**Table 9**

| LD50 values for Emamectin-benzoate (EMA), tocopherol (TOCO) and mixtures thereof in test on *Spodoptera exiqua.* | | | |
|---|---|---|---|
| Treatment | $LD50_{obs}$ [ng AI(s)/larvae] | $LD50_{exp}$ [ng AI(s)/larvae] | F(exp/obs) |
| EMA | 4.30 | | |
| EMA + TOCO (1:1) | 7.90<br>(3.95ng EMA + 3.95ng TOCO) | 8.6 | 1.09 |
| EMA + TOCO (1:3) | 12.20<br>(3.05ng EMA + 9.15ng TOCO) | 17.2 | 1.41 |

(continued)

| LD50 values for Emamectin-benzoate (EMA), tocopherol (TOCO) and mixtures thereof in test on *Spodoptera exiqua.* | | | |
|---|---|---|---|
| Treatment | $LD50_{obs}$ [ng AI(s)/larvae] | $LD50_{exp}$ [ng AI(s)/larvae] | F(exp/obs) |
| TOCO | >20000 | | |

According to the observed LD50 values shown in table 9, tocopherol had a low activity against the larvae. However, when the tocopherol was applied together with Emamectin benzoate, the two compounds exerted a synergistic activity on the *Spodoptera exiqua* as seen from the above F-values.

**Example 10**

The efficacy of an experimental Aversectin C 18 g/l oil-in-water formulation (EW) was tested on *Tetranychus urticae* on bean plant leaves *(Vicia faba)*. A mixture of methylated fatty acid and octanol was applied as solvent for the Aversectin C in the EW formulation. A similar formulation containing tocopheryl acetate, all-rac alpha, Ph. Eur. 5$^{th}$ Ed., was prepared. Dilutions of the Aversectin C EW, the tocopheryl acetate EW and mixtures of the two formulations in ratios 1:3, 1:1 and 3:1 were sprayed on bean plants in a spray cabinet and mites *(Tetranychus urticae)* were transferred to the plants after the leaf surfaces were dry. The degree of leaf damage was evaluated 7 days after the mites were placed on the plants, and ED50 values (g/ha) were calculated for the formulations and mixtures tested, see table below. The ED50 values are based on % leaf damage.

**Table 10**

| Calculated ED50 (g active ingredient(s)/ha) for the Aversectin C EW (AVE C), the tocopherol acetate EW (TOCO A) and mixtures of the two formulations in ratios 1:3, 1:1 and 3:1 in test on *Tetranychus urticae* mites on *Vicia faba.* ED50 values are based on % leaf damage. | | | |
|---|---|---|---|
| Formulation | $ED50_{obs}$ (g AI/ha) | $ED50_{exp}$ (g AI/ha) | F(exp/obs) |
| AVE C | 2.50 | | |
| AVE C + TOCO A (3:1) | 1.50 (1.13g AVE C + 0.38g TOCO A) | 3.3 | 2.20 |
| AVE C + TOCO A (1:1) | 2.00 (1g AVE C+ 1g TOCO A) | 4.8 | 2.42 |
| AVE C + TOCO A (1:3) | 3.80 (0.95g AVE C + 2.85g TOCO A) | 9.1 | 2.40 |
| TOCO A | 79.40 | | |

From the observed ED50 values for Aversectin C 18 g/l EW and tocopheryl acetate 18 g/l EW expected ED50 values for the mixtures were calculated according to Wadley's formula. The corresponding F-values in the above table show a synergistic insecticidal effect of Aversectin C and tocopheryl acetate on *Tetranychus urticae* for all mixtures tested.

**Example 11**

Abamectin, Ivermectin and tocopherol solutions in acetone were prepared. Mixed solutions of either Abamectin or Ivermectin and tocopherol were also prepared. Nymphs of *Dysdercus cingulatus* were treated topically with Abamectin acetone solution (20,000 ng/nymph), Ivermectin acetone solution (20,000 ng/nymph), a tocopherol acetone solution (20,000 ng/nymph) or a solution containing Abamectin and tocopherol or Ivermectin and tocopherol in the ratio 1:3 (20,000 ng total/nymph). The solutions were applied dorsally on the nymphs.
The *Dysdercus cingulatus* mortality was followed over time and recorded. Log time-mortality curves were constructed for the Abamectin and Ivermectin solutions and for the mixtures with tocopherol. An LT50 value was calculated for each application. The results of the *Dysdercus cingulatus* test are shown in the table below.

**Table 11**

| LT50 values for Abamectin, Ivermectin and their mixtures with tocopherol in the ratio 1:3. In total, 20,000 ng/nymph was applied. The results are based on two replicates, each consisting of ten *Dysdercus cingulatus* nymphs. | |
|---|---|
| Treatment | LT50 (h) |
| Abamectin | 5.3 |
| Abamectin + tocopherol (1:3) | 4.7 |
| Ivermectin | 9.1 |
| Ivermectin + tocopherol (1:3) | 6.4 |

Nymphs treated with 20,000 ng tocopherol did not die during the 24 h test period. It is seen that the LT50 value are smaller for the combined treatments, i.e. Abamectin + tocopherol as well as Ivermectin + tocopherol, than for the treatments with Abamectin or Ivermectin alone, thus an improvement in knock-down effect is observed especially taken into consideration, that each nymph treated with the combination only received 5,000 ng Abamectin or Ivermectin respectively while nymphs treated with either Avermectin or Ivermectin alone received 20,000 ng active ingredient.

**Example 12**

The efficacy of an experimental Abamectin 18 g/l oil-in-water formulation (EW) was tested on *Tetranychus urticae* on bean plant leaves *(Vicia faba).* A mixture of methylated fatty acid and octanol was applied as solvent for the Abamectin in the EW formulation. Besides testing the Abamectin 18 g/l EW formulation, Abamectin 18 g/l EW formulations containing a range of tocopheryl acetate, all-rac alpha, Ph. Eur. $5^{th}$ Ed., concentrations were tested as well. Dilutions of the formulations were sprayed on bean plants in a spray cabinet and mites *(Tetranychus urticae)* were transferred to the plants after the leaf surfaces were dry. The degree of leaf damage was evaluated 7 days after the mites were placed on the plants, and ED50 values (g/ha) were calculated for the formulations and mixtures tested, see table below. The ED50 values are based on % leaf damage.

**Table 12**

| Calculated ED50 (g/ha) for the experimental Abamectin (ABA) EW formulations containing tocopheryl acetate (TOCO A) in test on *Tetranychus urticae* mites on *Vicia faba.* ED50 values are based on % leaf damage. | | | |
|---|---|---|---|
| Formulation | $ED50_{obs}$ (g AI/ha) | $ED50_{exp}$ (gAI/ha) | F(exp/obs) |
| ABA | 0.71 | | |
| ABA + TOCO A (1:5) | 2.64 (0.44g ABA + 2.2g TOCO A) | 4.3 | 1.61 |
| ABA + TOCO A (1:9) | 4.00 (0.40g ABA + 3.6g TOCO A) | 7.1 | 1.77 |
| TOCO A | 79.4 | | |

From the observed ED50 values for Abamectin 18 g/l EW and tocopheryl acetate 18 g/l EW, expected ED50 values for the mixtures were calculated according to Wadley's formula. The corresponding F-values in the above table show a synergistic insecticidal effect of Abamectin and tocopheryl acetate on *Tetranychus urticae* for the two mixtures tested.

**Example 13**

Dilutions of a Spinosad suspension concentrate, an 18g/l EW formulation containing tocopheryl acetate, all-rac alpha, Ph. Eur. $5^{th}$ Ed., and mixtures of the two formulations were sprayed on bean plants *(Vicia faba)* in a spray cabinet and mites *(Tetranychus urticae)* were transferred to the plants after the leaf surfaces were dry. Treatments with 100 g ai/ha and 300 g ai/ha were used in this experiment. The degree of leaf damage was evaluated 7 days after the mites were placed on the plants and the percentage of the leaf protected by the treatment is shown in table 13.

**Table 13**

| The table shows % leaf protection for the Spinosad and tocopheryl acetate test on *Tetranychus urticae* on *Vicia faba.* Two different doses have been applied; 100 g ai/ha and 300 g ai/ha and the values are averages based on four evaluations. | | |
|---|---|---|
| **Applied active on leaf (g/ha)** | **% protection** | **R(obs/exp)** |
| 100 g/ha Spinosad | 5 | |
| 75 g/ha Spinosad 25 g/ha tocopheryl acetate | 35 | 2.33-7.00 |
| 50 g/ha Spinosad 50 g/ha tocopheryl acetate | 17.5 | 1.17-3.50 |
| 25 g/ha Spinosad 75 g/ha tocopheryl acetate | 50 | 3.33-10.00 |
| 100 g/ha tocopheryl acetate | 15 | |
| **Applied active on leaf (g/ha)** | **% protection** | **R(obs/exp)** |
| 300 g/ha Spinosad | 5 | |
| 225 g/ha Spinosad 75 g/ha tocopheryl acetate | 60 | 6.86-12.00 |
| 150 g/ha Spinosad 150 g/ha tocopheryl acetate | 62.5 | 7.14-12.50 |
| 75 g/ha Spinosad 225 g/ha tocopheryl acetate | 55 | 6.29-11.00 |
| 300 g/ha tocopheryl acetate | 8.8 | |

Using the alternative method for determining synergism the effect of each mixture of Spinosad and tocopheryl acetate is compared with the effect of the same rate of each of the active ingredients used alone. Since both Spinosad and tocopheryl acetate has an ef fect the R-values are calculated as a range using the effect of both actives. As can be seen in the above table synergism exists, since the observed effect of each mixture is greater than the observed effect of either component used alone on *Tetranychus urticae.*

## Claims

**1.** A method for controlling harmful pests comprising exposing said harmful pests to an effective amount of a synergistic combination of at least one compound A which is selected among Glutamate- or GABA-gated chloride channel agonist pesticides and at least one compound B which is selected among Vitamin E and Niacin.

**2.** The method according to claim 1, wherein the weight ratio of compounds A to compounds B is in the range of 20: 1 to 1:30.

**3.** The method according to claim 1 or claim 2, wherein the compound A is selected among avermectins, milbemycins and spinosyns.

**4.** The method according to any of the claims 1 to 3, wherein the compound B is Vitamin E.

**5.** The method according to any of the claims 1 to 3, wherein the compound B is Niacin.

**6.** The method according to any of the previous claims wherein the compound A is selected among Abamectin, Aversectin C, Doramectin, Emamectin (optionally in the form of its benzoate salt), Eprinomectin, Ivermectin, Selamectin, Milbemectin, Milbemycin oxime, Moxidectin, Lepimectin, Nemadectin and Spinosad.

**7.** The method according to claim 6, wherein the compound A is selected among Abamectin, Emamectin (optionally

in the form of its benzoate salt), Ivermectin and Spinosad.

**8.** A composition comprising at least one compound A which is selected among Glutamate- or GABA-gated chloride channel agonist pesticides, and at least one compound B which is selected among Vitamin E and Niacin, wherein the compounds A and B are present in a synergistically effective amount.

**9.** The composition according to claim 8, wherein the weight ratio of compounds A to compounds B is in the range of 20:1 to 1:30.

**10.** The composition according to claim 8 or 9, wherein the composition is formulated for use in a method of controlling harmful pests in beneficial crops.

**11.** The composition according to claim 8 or 9, wherein the composition is formulated for use in a method of controlling harmful pests in or on animals including humans.

**12.** The composition according to claim 11, wherein the composition comprises at least one compounds A , at least one compound B and a carrier or solvent with the provisio that if the compound A is an avermectin and the compound B is vitamin E then the composition does not comprises a pyrrolidone solvent in combination with a solvent selected among diethylene glycol monobutyl ether, benzyl benzoate, isopropyl alcohol and xylenes, and with the further provisio that if the compound A is Ivermectin and the compound B is vitamin E then the composition is not part of a nutritive composition.

**13.** Method of controlling harmful pests on plants, comprising administrating a composition according to claim 10 on the plants being treated.

**14.** Method of controlling harmful pests in or on animals including humans, comprising administrating a composition according to claim 11 or 12 to the animals being treated.

**15.** Kit comprising a first composition comprising at least one compound A and a second composition comprising at least one compound B.

**16.** Use of a composition as claimed in claim 8 for the manufacture of a medicament for the control of pests in humans or domestic animals or their environs.

European Patent Office

# EUROPEAN SEARCH REPORT

Application Number
EP 06 38 8016

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X,D | CARLOS ROBERTO SILVA ET AL.: "Composiçao de açao antiparasitaria e/ou ectoparasiticida e ativadora do metabolismo animal" INTERNET ARTICLE, [Online] 4 February 2003 (2003-02-04), XP002392883 Retrieved from the Internet: URL:http://www.inpi.gov.br/> [retrieved on 2006-07-31] Article obtained by searching in the patent database of the Brazilian INPI (http://www.inpi.gov.br/) the reference: PI0102125. The search is done by clicking on the link "pesquisar base patente". * abstract * ----- | 1-4, 6-12,14, 16 | INV. A01N43/90 A01N43/22 A01P7/00 ADD. A01N43/40 A01N43/16 |
| X | WO 02/068442 A (SYNGENTA PARTICIPATIONS AG; PITTERNA, THOMAS) 6 September 2002 (2002-09-06) * page 1 * * page 21, paragraph 4 * * page 22, last paragraph * * example P6.1; compounds A111-A115 * ----- | 1-3, 5-14,16 | TECHNICAL FIELDS SEARCHED (IPC) A01N |
| X | WO 02/37964 A (SYNGENTA PARTICIPATIONS AG; ANGST, MAX; RINDLISBACHER, ALFRED; MAIENFI) 16 May 2002 (2002-05-16) * page 1, paragraph 3 - page 5 * * compounds I,XV,CXLV,CLIV,CLV,CXCV * ----- | 1-3, 5-14,16 | |
| A | WO 98/27817 A (BAYER AKTIENGESELLSCHAFT; SIRINYAN, KIRKOR; DORN, HUBERT; HEESCHEN, KE) 2 July 1998 (1998-07-02) * abstract * ----- -/-- | 1-16 | |

The present search report has been drawn up for all claims

| Place of search | Date of completion of the search | Examiner |
|---|---|---|
| Munich | 1 August 2006 | Molina de Alba, J |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
& : member of the same patent family, corresponding document

2

EPO FORM 1503 03.82 (P04C01)

European Patent Office

# EUROPEAN SEARCH REPORT

Application Number
EP 06 38 8016

| DOCUMENTS CONSIDERED TO BE RELEVANT | | | |
|---|---|---|---|
| Category | Citation of document with indication, where appropriate, of relevant passages | Relevant to claim | CLASSIFICATION OF THE APPLICATION (IPC) |
| A | WO 03/070000 A (BAYER CROPSCIENCE AKTIENGESELLSCHAFT; ANDERSCH, WOLFRAM; ERDELEN, CHRI) 28 August 2003 (2003-08-28)<br>* abstract *<br>----- | 1-16 | |
| A | WO 99/60857 A (BAYER AKTIENGESELLSCHAFT; ANDERSCH, WOLFRAM; SCHNORBACH, HANS-JUERGEN;)<br>2 December 1999 (1999-12-02)<br>* examples 1-3 *<br>----- | 1-16 | |
| | | | TECHNICAL FIELDS SEARCHED (IPC) |

The present search report has been drawn up for all claims

| Place of search | Date of completion of the search | Examiner |
|---|---|---|
| Munich | 1 August 2006 | Molina de Alba, J |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
& : member of the same patent family, corresponding document

2

EPO FORM 1503 03.82 (P04C01)

## ANNEX TO THE EUROPEAN SEARCH REPORT ON EUROPEAN PATENT APPLICATION NO. EP 06 38 8016

This annex lists the patent family members relating to the patent documents cited in the above-mentioned European search report.
The members are as contained in the European Patent Office EDP file on
The European Patent Office is in no way liable for these particulars which are merely given for the purpose of information.

01-08-2006

| Patent document cited in search report | Publication date | Patent family member(s) | Publication date |
|---|---|---|---|
| WO 02068442 A | 06-09-2002 | BR 0207650 A | 01-06-2004 |
| | | CA 2438202 A1 | 06-09-2002 |
| | | CN 1503805 A | 09-06-2004 |
| | | CZ 20032288 A3 | 12-11-2003 |
| | | EG 23125 A | 28-04-2004 |
| | | EP 1363926 A1 | 26-11-2003 |
| | | HU 0303255 A2 | 28-01-2004 |
| | | JP 2004521131 T | 15-07-2004 |
| | | MA 26395 A1 | 01-12-2004 |
| | | MX PA03007022 A | 18-11-2003 |
| | | NZ 527568 A | 29-04-2005 |
| | | PL 363806 A1 | 29-11-2004 |
| | | US 2006105971 A1 | 18-05-2006 |
| | | US 2005090458 A1 | 28-04-2005 |
| | | ZA 200305795 A | 29-06-2004 |
| WO 0237964 A | 16-05-2002 | AU 1404502 A | 21-05-2002 |
| WO 9827817 A | 02-07-1998 | AU 736083 B2 | 26-07-2001 |
| | | AU 5756198 A | 17-07-1998 |
| | | BR 9714236 A | 18-04-2000 |
| | | CA 2275657 A1 | 02-07-1998 |
| | | CN 1241908 A | 19-01-2000 |
| | | DE 19654079 A1 | 25-06-1998 |
| | | EP 0946099 A1 | 06-10-1999 |
| | | HK 1025014 A1 | 20-08-2004 |
| | | HU 0000600 A2 | 28-07-2000 |
| | | JP 2001507685 T | 12-06-2001 |
| | | KR 2000057545 A | 25-09-2000 |
| | | NZ 336344 A | 30-03-2001 |
| | | PL 334181 A1 | 14-02-2000 |
| | | RU 2222193 C2 | 27-01-2004 |
| | | TW 448047 B | 01-08-2001 |
| | | US 2003055089 A1 | 20-03-2003 |
| | | ZA 9711496 A | 24-06-1998 |
| WO 03070000 A | 28-08-2003 | AU 2003206870 A1 | 09-09-2003 |
| | | BR 0307834 A | 07-12-2004 |
| | | CA 2476818 A1 | 28-08-2003 |
| | | CN 1646016 A | 27-07-2005 |
| | | DE 10207242 A1 | 04-09-2003 |
| | | EP 1478234 A1 | 24-11-2004 |
| | | HR 20040866 A2 | 30-04-2005 |
| | | JP 2005517713 T | 16-06-2005 |
| | | MX PA04008065 A | 26-11-2004 |
| | | US 2005130913 A1 | 16-06-2005 |

EPO FORM P0459

For more details about this annex : see Official Journal of the European Patent Office, No. 12/82

**ANNEX TO THE EUROPEAN SEARCH REPORT ON EUROPEAN PATENT APPLICATION NO.** EP 06 38 8016

This annex lists the patent family members relating to the patent documents cited in the above-mentioned European search report.
The members are as contained in the European Patent Office EDP file on
The European Patent Office is in no way liable for these particulars which are merely given for the purpose of information.

01-08-2006

| Patent document cited in search report | Publication date | Patent family member(s) | Publication date |
|---|---|---|---|
| WO 03070000 A | | ZA 200406488 A | 16-08-2005 |
| WO 9960857 A | 02-12-1999 | AU 757771 B2 | 06-03-2003 |
| | | AU 4263499 A | 13-12-1999 |
| | | BR 9910699 A | 09-01-2001 |
| | | CN 1311632 A | 05-09-2001 |
| | | CN 1714644 A | 04-01-2006 |
| | | DE 19823396 A1 | 02-12-1999 |
| | | EP 1082014 A1 | 14-03-2001 |
| | | ES 2201758 T3 | 16-03-2004 |
| | | JP 2002516258 T | 04-06-2002 |
| | | TW 402484 B | 21-08-2000 |
| | | US 6444667 B1 | 03-09-2002 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- US 3950360 A
- US 4310519 A
- US 4378353 A
- US 5288710 A
- US 4427663 A
- US 4199569 A
- US 5089480 A
- US 5981500 A
- US 6933260 B
- US 4547520 A
- US 4900753 A
- US 5346918 A
- US 5428034 A
- US 4587247 A
- US 5405867 A
- US 5276033 A
- US 4945105 A
- US 4963582 A
- US 4869901 A
- US 5614470 A
- US 5496931 A
- US 5539089 A
- US 5670364 A
- WO 9700265 A1
- US 4560677 A
- US 5004493 A
- DE 4437945 A1
- WO 200495926 A2
- US 6340672 B
- WO 200537294 A1
- BR PI0102125
- WO 0170028 A1


### Non-patent literature cited in the description


- **COLBY, S. R.** Calculating synergistic and antagonistic responses of herbicide combination. *Weeds,* 1967, vol. 15, 20-22
- **LIMPEL et al.** *Proc. NEWCC,* 1962, vol. 16, 48-53
- Isoboles, a graphic representation of synergism in pesticides. *Netherlands Journal of Plant Pathology,* 1964, vol. 70, 73-80
- **LEVI et al.** *EPPO-Bulletin,* 1986, vol. 16, 651-657
- **D.L. RICHER.** *Pesticide Science,* 1987, vol. 19, 309-315